Europäisches Patentamt

(19) European Patent Office

Office européen des brevets

(11) Publication number : **0 336 980 B1**

(12) **EUROPEAN PATENT SPECIFICATION**

(45) Date of publication of patent specification :
13.12.95 Bulletin 95/50

(51) Int. Cl.$^6$ : **G11B 5/09**, G11B 5/02

(21) Application number : 88908982.7

(22) Date of filing : 12.10.88

(86) International application number :
PCT/JP88/01041

(87) International publication number :
WO 89/03575 20.04.89 Gazette 89/09

(54) **Vertical magnetic recording method**

(30) Priority : 12.10.87 JP 256830/87

(43) Date of publication of application :
18.10.89 Bulletin 89/42

(45) Publication of the grant of the patent :
13.12.95 Bulletin 95/50

(84) Designated Contracting States :
DE FR GB NL

(56) References cited :
EP-A- 0 131 823
EP-A- 0 147 963
EP-A- 0 214 567
JP-A- 0 536 010
JP-A- 5 156 211
JP-A- 5 417 710
JP-A- 5 425 715
JP-A- 5 963 007
JP-A-51 110 315
JP-A-55 113 114
JP-A-62 295 203

(56) References cited :
FUNKSCHAU. no. 3, February 1984, MÜNCHEN
DE pages 58 - 61; N. BAUER: '20 MByte auf
C-90-Kassette'
ELECTRONICS INTERNATIONAL vol. 55, no.
19, September 1982, NEW YORK US pages 131
- 135; R. D. FISHER & J. TARANTO: 'Vertical
recording brings disk drives standing-room-
only densities'

(73) Proprietor : VICTOR COMPANY OF JAPAN,
LIMITED
12, 3-chome, Moriya-Cho
Kanagawa-ku
Yokohama-Shi Kanagawa-Ken 221 (JP)

(72) Inventor : WATANABE, Noboru
Room C Izumi-so
41-1, Nakao-cho
Asahi-ku
Yokohama-shi Kanagawa-ken 241 (JP)

(74) Representative : Crawford, Andrew Birkby et al
A.A. THORNTON & CO.
Northumberland House
303-306 High Holborn
London WC1V 7LE (GB)

## Description

TECHNICAL FIELD

This invention relates to a perpendicular magnetic recording method, and more particularly to a method of carrying out perpendicular magnetic recording using a ring head.

BACKGROUND ART

In recent years, as a magnetic recording system capable of realizing high density recording, a perpendicular magnetic recording system adapted to conduct magnetization perpendicular to the medium surface of a magnetic layer of the magnetic recording medium has been proposed. For such a perpendicular magnetic recording method, various types of systems are proposed. For one of these systems, there is a perpendicular magnetic recording method to effect a perpendicular magnetization using a ring head having one gap or a plurality thereof.

In the case of recording a rectangular wave and to reproduce that wave in the conventional perpendicular magnetic recording system using ring head, it is known that the reproduced waveform becomes a dipulse asymmetrical with respect to the origin (see IEEE TRANSACTIONS ON MAGNETICS, VOL. MAG-18, No. 2, MARCH 1982, pp 769 to 771). This is considered to result from ① the fact that remanent magnetization is asymmetrical with respect to the magnetic transition (flux reversal) position, and ② the fact that the magnetic field produced by the ring head has considerable in-plane (magnetic layer) components, so that the magnetization is inclined in the in-plane direction, or the like in the conventional perpendicular magnetic recording method.

For a method of data discrimination from asymmetrical dipulse, there have been proposed ① zero crossing detection, ② peak detection and ③ maximum slope point detection. In particular, the methods ① and ② mentioned above are presently used in common.

The method ① is a method to transform the dipulses from being asymmetrical to being symmetrical with respect to the zero crossing by Hilbert transform, etc. and to carry out detection of the zero crossing. Further, the method ② is a method to transform an asymmetrical dipulse to a symmetrical single peak pulse by Hilbert transform, etc. and to carry out peak detection. In addition, the method ③ is a method to apply double differentiation to an asymmetrical waveform to detect the maximum slope point.

However, phase and amplitude corrections are made at the time of reproduction or playback both in the above-mentioned methods ① and ②. By changes of the recording medium characteristics (dispersion of crystal axis $\Delta\theta_{50}$, saturation magnetization

Ms, Hc and anisotropy field Hk, etc.), and the ring head properties (gap length and spacing, etc.), the symmetry of dipulse varies considerably. Accordingly, there arises a problem in that it is required for precisely conducting data discrimination to make a correction in response to slight changes in the recording medium proprieties or the gap length of the ring head, etc. In addition, Hilbert transform is conducted in a waveform equalizer circuit provided in the reproduction circuit, resulting in the problem that the circuit arrangement of the reproducing circuit becomes complicated.

Funkschau no. 3 (February 1984; p58-61; N. Bauer) "20 MByte auf C-90-Kassette" ("20 MBytes on a C-90 cassette") discloses a method whereby a digital input signal is converted to a series of short pulses by an NRZD process, which are then used as a recording current to store data indicative of the input signal by depthwise magnetisation of a magnetic tape for longitudinal recording.

According to the present invention, there is provided a method for performing perpendicular magnetic recording of a magnetic medium, the method comprising the steps of:

inputting a binary signal to be recorded;

generating a train of narrow pluses the polarities of which are switched alternately in correspondence with a polarity change of a waveform of said binary signal, the time Tw corresponding to the width of said narrow pulse being set smaller than the time Bmin corresponding to a minimum polarity switching interval of said recording current and a neutral level period being maintained for a time longer than zero between adjacent narrow pulses having different polarities from each other; and

applying said train of narrow pulses as a recording current to a ring head for causing a perpendicular anisotropic medium to have magnetic transitions.

According to a preferred embodiment of the invention, the ring head leading and trailing edges opposing each other through a gap (magnetic gap).

The perpendicular component of a magnetic field at the leading and trailing edges and the magnetic fields thereat have opposite polarities and equal intensities. Accordingly, where perpendicular magnetization is applied to the medium at the leading and trailing edges at the same time, magnetizations baving polarities opposite to each other are formed on the medium with the central position of the gap being a magnetization transition position. In addition, since the intensities of the magnetizations having different polarities are equal to each other, the intensities of magnetic fields recorded on the medium are nearly equal to each other. Accordingly, in the case of reproducing the perpendicular magnetic recording by the above-mentioned perpendicular magnetic recording method, the reproduced waveform becomes a symmetrical waveform having the output zero position (i.e., the magnetization transition position) as the center.

The waveform of a recording current is composed of narrow pulses having opposite polarities in accordance with the polarity reversals of an original signal to be recorded, and of neutral levels between adjacent narrow pulses. Therefore, the magnetization state becomes symmetric relative to position of magnetization transition so that the dipulse ratio can be made substantially 1 irrespective of the characteristics of a medium and ring head. In addition, a circuit for a waveform equalization process is not needed, to thus allow a simple circuit arrangement and dispense with adjustment of the overall circuit.

BRIEF DESCRIPTION OF THE DRAWINGS

FIGS. 1A and 1B are views for explaining the fundamental principle of a perpendicular magnetic recording method according to this invention;

FIGS. 2A and 2B are views for explaining the conventional longitudinal recording, respectively;

FIGS. 3A and 3B, 4A and 4B, 5A and 5B, and 6A and 6B are views for explaining examples of the conventional perpendicular magnetic recording method, respectively;

FIGS. 7A and 7B are views showing respectively the magnetization pattern and the reproduced waveform of a recorded signal by the conventional perpendicular magnetic recording method;

FIGS. 8A and 8B are views showing a comparison between a conventional recording current waveform and a recording current waveform according to the present invention for the NRZI (Non Return Zero Inverse) recording signal;

FIGS. 9A and 9B, 10A and 10B, 11A and 11B, and 12A and 12B are views showing, with a progress of time, the manner how the magnetization is formed in accordance with the recording method according to an embodiment of the present invention;

FIGS. 13A to 13D are views for explaining the recording method according to the present invention in the short wavelength region;

FIG. 14A shows a conventional recording current waveform;

FIG. 14B shows a recording current waveform generated by a method according to the present invention;

FIG. 15 is a view showing an example of a circuit for generating a recording waveform according to the present invention;

FIGS. 16A to 16C are views showing a reproduced waveform, a recording current waveform, and a pattern of magnetization by a recording system utilizing a method according to the present invention with them being in relation to each other, respectively;

FIGS. 17A to 17C are views showing a reproduced waveform, a recording current waveform, and a pattern of magnetization by the conventional NRZI recording system with them being in relation to each other, respectively;

FIG. 18 is a graph showing input/output characteristics of the conventional NRZI recording system and a recording system utilizing a method according to the present invention;

FIG. 19 is a graph showing wavelength characteristics of the conventional NRZI recording system and a recording system utilizing a method according to the present invention;

FIGS. 20A and 20B are views for explaining how to calculate a bit shift quantity;

FIG. 21 is a graph showing bit shift characteristics of the conventional NRZI recording system and a recording system utilizing a method according to the present invention;

FIG. 22 is a view showing a reproduced waveform of 120 KBPI 5 bit pattern in the conventional NRZI recording system;

FIG. 23 is a view showing a reproduced waveform of 120 KBPI 5 bit pattern in a recording system utilizing a method according to the present invention;

FIG. 24 is a view showing a reproduced waveform of 100 KBPI 2 bit pattern in the conventional NRZI recording system;

FIG. 25 is a view showing a reproduced waveform of 100 KBPI 2 bit pattern in a recording system utilizing a method according to the present invention;

FIGS. 26A to 26C are views for explaining a modification of the recording waveform according to the present invention;

FIG. 27A shows a waveform in a conventional NRZ recording system;

FIG. 27B shows a waveform in the NRZ recording system to which the present invention is applied;

FIG. 28A shows a waveform in a conventional NRZI recording system;

FIG. 28B shows a waveform in the NRZI recording system to which the present invention is applied;

FIG. 29A shows a waveform in a conventional MFM recording system; and

Fig. 29B shows a waveform in the MFM recording system to which the present invention is applied.

BEST MODE FOR CARRYING OUT THE INVENTION

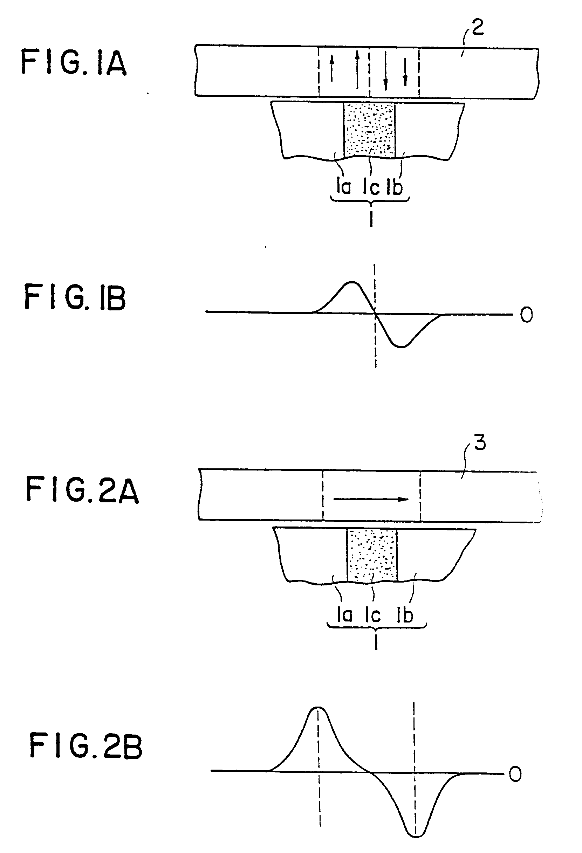

Initially, the fundamental principle of a perpendicular magnetic recording method according to this invention will be described with reference to FIGS. 1 and 2.

FIGS. 1A and 2A show magnetization patterns (indicated by arrows in the figures) when a recording such that the relative speeds between the ring head 1 and magnetic recording medium 2 and 3 are set to zero, i.e., a so-called static recording is conducted, respectively, and FIGS. 1B and 2B show reproduced waveforms thereof, respectively. A perpendicular anisotropic medium is used as the magnetic recording medium 2 in FIG. 1A, and an in-plane anisotropic medium is used as the magnetic recording medium 3 in FIG. 2A, wherein the ring head 1 is excited by direct current in both cases.

In the case of the so-called longitudinal recording shown in FIG. 2A, since longitudinal magnetic fields in the vicinity of left and right poles la and lb of the ring head 1 have the same polarity, magnetization corresponding to 2 bits is formed (the reproduced waveform is shown in FIG. 2B).

On the other hand, in the case of the perpendicular magnetic recording shown in FIG. 1A, since perpendicular magnetic fields in the vicinity of poles 1a and 1b of the ring head have polarities opposite to each other, magnetizations corresponding to one bit having polarities opposite to each other are formed with the center line of gap 1c (indicated as grained) being as a magnetization transition position on both sides thereof. In particular, the perpendicular components on the magnetic field ranging from the pole 1a to the pole 1b, and in which the ring head 1 produces a magnetization effect, and intensities thereof are nearly equal to each other in the vicinity of the poles 1a and 1b. Accordingly, the intensities of magnetizations having polarities opposite to each other and formed on both sides of the magnetization transition position are nearly equal to each other. The reproduced waveform of recording vertically magnetized in this way has a symmetry with the output zero level position (corresponding to the magnetization transition position) being the center as shown in FIG. 1B. Thus, when there is only static recording, the reproduced waveform is symmetrical, so that data discrimination can be carried out using the reproduced waveform as it is without effecting waveform equalization, e.g., Hilbert transform, etc.

The perpendicular magnetic recording will be described on the basis of the above described fundamental principle, for when the ring head and the perpendicular magnetic recording medium (which will be simply called "perpendicular medium" hereinafter) have a relative speed in the perpendicular magnetic recording.

To clarify the description of a perpendicular magnetic recording method according to this invention, a conventional perpendicular magnetic recording method will be first described, thus referring to the reason why the reproduced waveform becomes asymmetrical.

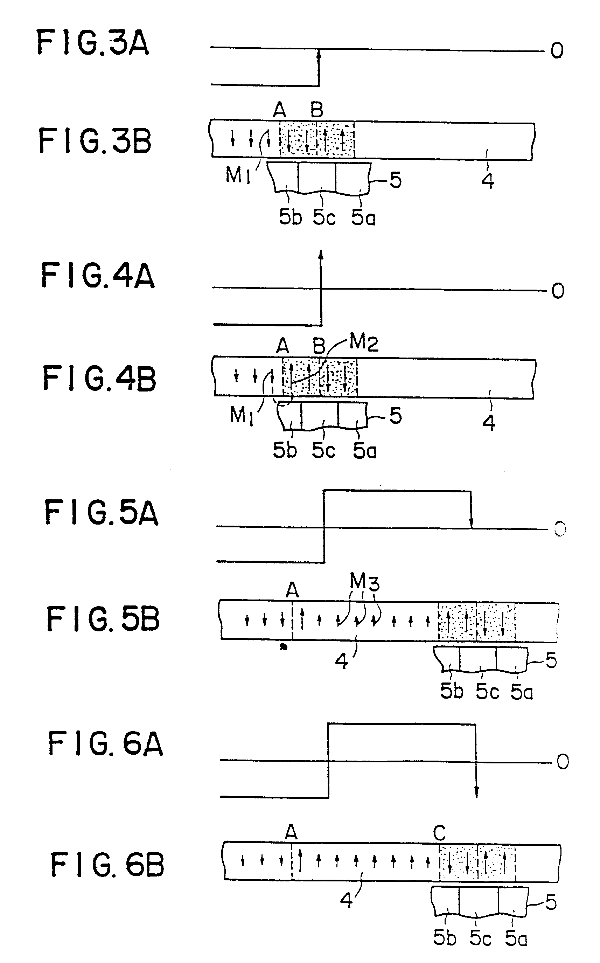

FIGS. 3 to 6 are views showing, with a progress of time, the manner how the perpendicular recording is conducted for an NRZI signal in the NRZI recording. Recording current waveforms are shown in FIGS. 3A, 4A, 5A and 6A and magnetization patterns of perpendicular medium 4 are shown in FIGS. 3B, 4B, 5B and 6B (lengths of arrows show respective intensities of magnetizations). Further, it is assumed that the ring head 5 is relatively shifted to the right direction in the fugure. In addition, the range indicated as grained in each figure is a magnetization range of the perpendicular medium 4 by the ring head 5.

Referring to FIG. 3B, when it is assumed that the center of the gap 5c of the ring head 5 having leading edge 5a and trailing edge 5b comes from the infinity to the position indicated by B in the figure, magnetization $M_1$ in the vicinity of the position A is subjected to demagnetization field expressed as $Hd = 4\pi Ms$ by the magnetization in the same direction previously recorded.

Assuming now that the recording current is inverted and thus magnetization between regions A and B is inverted as shown in FIG. 4B, magnetization $M_2$ within the region from A to B is subjected to a demagnetization field by magnetization (e.g., $M_1$) previously formed in a direction left of the position A. However, because the magnetization $M_2$ within the region from A to B is inverted, and thus the direction (indicated by an arrow of broken lines in the figure) of the demagnetization field is a direction which strengthens the magnetization, the magnitude of the magnetization is expressed as $M_2>M_1$. Thus, the intensities formed on the left and right sides of the position A (this position becomes a magnetization transition position) with the position A being as a center become not identical each other. This is the main reason why the reproduced waveform becomes asymmetrical.

It is to be noted that magnetization $M_3$ formed by the ring head 5 is subjected to a demagnetization field expressed as $Hd = 4\pi Ms$ at the bit central portion (the portion between one recording position and the next recording position) as shown in FIG. 5. In addition, one bit is recorded with the position C being as a magnetization transition position resulting from the fact that the polarity of the current is inverted as shown in FIG. 6A.

As described above, in the conventional magnetic recording method, intensities of magnetizations on both sides of the magnetization transition positions A and C are not equal due to the fact that the magnetic field of the ring head 5 is reversed when the polarity of the recording current is inverted. This is the main reason for the reproduced output waveform being asymmetrical.

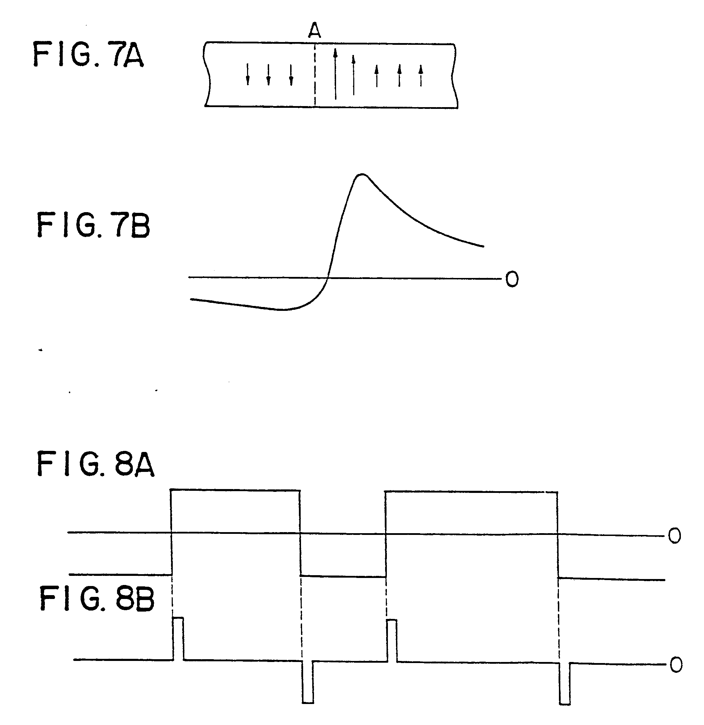

FIG. 7B shows the isolated reproduced waveform in the perpendicular magnetic recording by the NRZI method, related to the magnetization pattern shown in FIG. 7A. In addition, in the conventional method, the magnetization performed by the leading edge 5a is erased by the magnetic field of the trailing edge 5b following from behind due to relative displacement of the ring head 5 in the direction toward right. As a result, only magnetization by the trailing edge 5b actually contributes to the perpendicular magnetization.

In light of the above, the perpendicular magnetization recording to which this invention is applied will be described with reference to FIGS. 8 to 12.

This invention is characterized in that the recording current waveform shown in FIG. 8B (this recording current waveform is called hereinafter an FP (foot prints) recording current waveform for convenience, and the perpendicular magnetic recording system using FP recording waveform is called an FP recording system) is used as the recording current waveform in place of the NRZI recording waveform conventionally used shown in FIG. 8A. FIGS. 8A and 8B show the conventional NRZI recording waveform and the FP recording waveform in correspondence with each other. As shown in these figures, the FP recording waveform is a waveform such that a pulse current having a very small width which is positive when the NRZI recording waveform rises and is negative when it falls is permitted to flow. Assuming that the levels of these narrow width pulses are +1 and -1, the level between pulses takes a current value of neutral level (0).

There is known a pulse train current waveform similar to the FP recording waveform having narrow pulses inversed in synchronization with the inversion of a recording signal waveform, as disclosed in Japanese Patent Laid-open Publication No. 60-61904. However, this pulse train current waveform is different from the FP recording waveform of this invention in the following points.

Namely, the FP recording waveform of this invention is characterized in that for any signal of a binary format to be recorded, a pulse of a certain polarity is subsequently followed without fail by a pulse having an opposite polarity to the certain polarity so that the FP recording waveform is constructed of a train of pulses for which the polarities change alternately, and in that a period maintaining a neutral level (0 level) is present by all means between such pulses. As a result, different from the known pulse train current waveform, there is no case in the present invention where pulses of the same polarity are generated consecutively or where a pulse of a certain polarity changes to a pulse of the other polarity without having therebetween through the 0 level period.

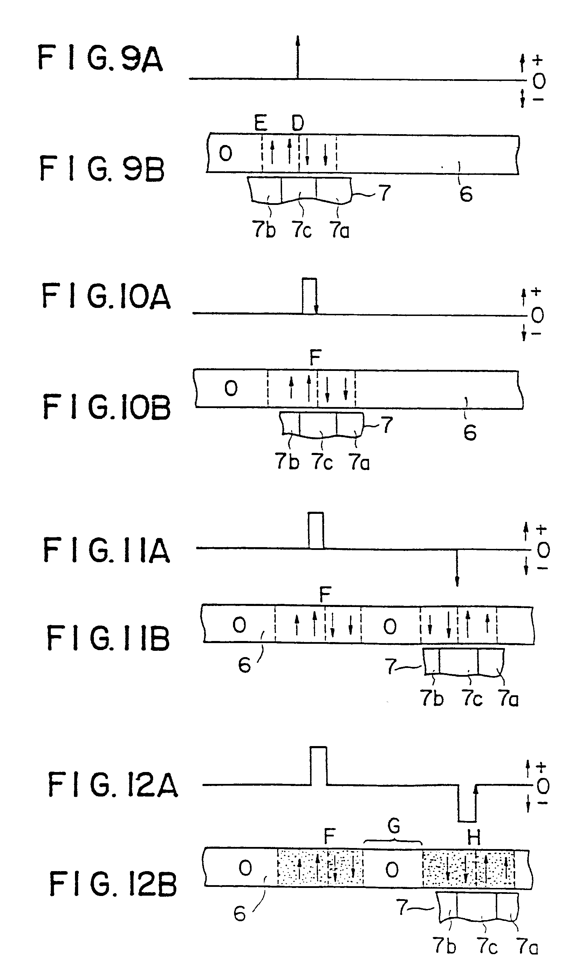

The manner by which perpendicular magnetization is applied to perpendicular medium 6 (which is assumed as an unrecorded medium) by the FP recording waveform is shown time sequentially, in FIGS. 9 to 12. In this instance, recording current waveforms are shown in FIGS. 9A, 10A, 11A and 12A and magnetization patterns in perpendicular medium 6 are shown in FIGS. 9B, 10B, 11B and 12B, respectively.

As shown in FIG. 9B, it is assumed that when the center of gap 7c of ring head 7 (comprising leading portion 7a, trailing portion 7b and gap 7c) comes to the position indicated by D, the FP recording waveform rises, so that a positive current is caused to flow in the ring head 7. Thus, the ring head 7 is excited, so that magnetizations having polarities opposite to each other are formed on both sides of the position D as a center. It is to be noted that because no current flows until the center of the gap 7c reaches the position D, the perpendicular medium 6 on the left side of the magnetization range of the ring head 7, i.e., on the left side of the position E is not magnetized. Portions which are not magnetized on the perpendicular medium 6 are indicated by "0".

Since the FP recording waveform has a waveform such that a pulse current having a very small width is allowed to flow, after a current is caused to flow for a very short time (this time is referred as Tw), power delivered to the ring head 7 is stopped as shown in FIG. 10. Because current is returned to zero but not going further to a reversed polarity region in the FP recording waveform, no reversal of magnetization occurs. Thus, substantially symmetrical magnetizations are formed on both sides of the gap 7c of the ring head 7 on the perpendicular medium 6 with the center line thereof being a magnetic transition position (indicated by F in the figure). This is apparent from the above-described fundamental principle.

It is to be noted that as the center position of the gap displaces from the position D to the position F due to the fact that the ring head 7 is relatively moved for a time period of the very small time Tw, the magnetization by the trailing edge 7b partially overlaps with the magnetization formed by the leading edge 7a thus cancelled thereby, and that although the magnetization range on the left side of the position F becomes larger than the magnetization range on the right side, there is no problem because Tw is very short.

On the other hand, in the case of the FP recording system, since current is zero at the bit central portion, no magnetization is formed on the perpendicular medium 6 as shown in FIGS. 11B and 12B. Magnetization is formed when a pulse current having a very small width in the FP recording waveform flows. At this time, magnetizations having polarities opposite to each other are formed in narrow regions on both sides of the magnetic transition positions F and H with these positions being their centers.

According to the FP recording system, magnetizations having polarities opposite to each other are formed at the same time by the leading edge 7a and the trailing edge 7b, and those magnetizations have intensities nearly equal to each other because they are magnetized by a magnetic field produced from the same ring head 7. Namely, the respective magnetizations are symmetrical each other. Moreover, since magnetization is formed only when a pulse current having a very small width of the FP recording waveform flows, even if the ring head 7 displaces relative to the perpendicular medium 6, there is no possibility that the trailing edge 5b cancels the magnetization formed by the leading edge 5a, with the result that the magnetization having polarities opposite to each other is maintained. Further, when attention is drawn to the magnetization region (indicated as frosted patterns in FIG. 12B) constituting one bit, because the bit central region (region indicated by G in FIG. 12B) between adjacent magnetized regions is not magnetized, there is no possibility that respective magnetized regions are subjected to demagnetization fields. Thus, substantially symmetrical magnetizations are formed on both sides of magnetic transition positions F and H with these positions as their centers. When this perpendicular magnetic recording signal is reproduced, a symmetrical reproduced dipulse waveform can be obtained. Thus, the necessity of applying waveform equalization (Hilbert transform, etc.) to a reproduced waveform on the side of a reproduction circuit is eliminated, thereby making it possible to simplify the configuration of the reproducing circuit.

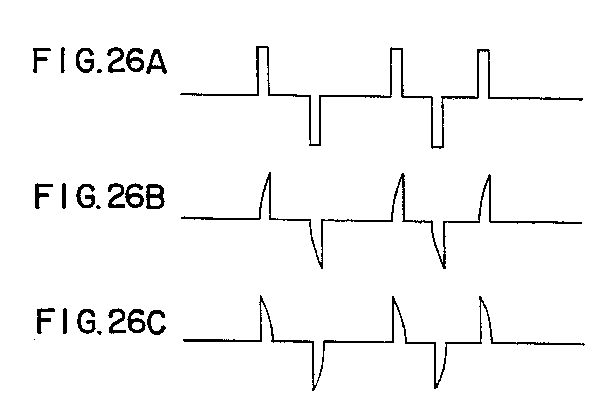

As the recording wavelength becomes short, the region of magnetization "0" (region indicated by G in FIG. 12B) at the bit central portion becomes short where the spacing between adjacent magnetic transition positions is small. Thus, this FP recording system gradually approaches the NRZI recording system. The FP recording system in the short wavelength region will be described with reference to FIG. 26.

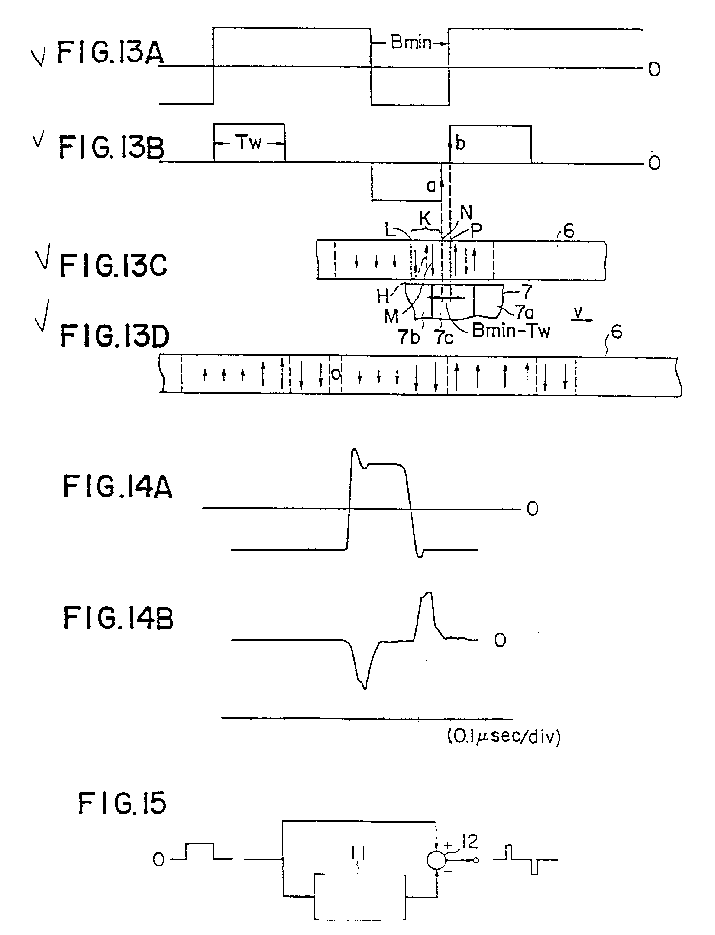

FIG. 13A shows a NRZI signal waveform, FIG. 13B an FP recording waveform corresponding to the NRZI signal waveform, FIG. 13C a manner how magnetization is formed in the short wavelength region, and FIG. 13D a magnetization pattern formed on the perpendicular medium 6. Now, as shown in FIGS. 13A and 13B, the minimum length between transitions (minimum interval between two consecutive polarity reversals) and the very narrow pulse width are assumed as Bmin (sec) and Tw (sec) respectively and are taken in terms of time. Further, assuming that the relative speed of the ring head 7 and the perpendicular medium 6 is V (m/s), the minimum distance between transitions is V x Bmin which is ordinarily set to a length at least twice as large as the gap length in order to avoid the influence of the gap loss.

As described above, the region of magnetization "0" at the bit central portion becomes narrow in the short wavelength region (in the high density recording region). As a result, the minimum length between transitions Bmin and the very small pulse width Tw become nearly equal to each other. In the case of Bmin = Tw (the positions of the switching currents a and b are identical with each other), this is not suitable because magnetization in the K region is reversed by the switching current b and therefore the transition position displaces to L (which is the same as in the NRZI system).

The system according to this invention is characterized in that the very small pulse width Tw of the FP recording waveform is set to be smaller than the minimum length between transitions Bmin, and the Bmin apparently takes a finite length longer than 0. By making a setting such that Tw<Bmin as just described above, magnetization formed by the falling current a shown in FIG. 13B (which is indicated by an arrow M directed downwardly within the region K in the figure) is not reversed by a magnetic field applied to the perpendicular medium 6 by the rising current b (which is indicated by an arrow H of broken lines directed upwardly within the region K). Thus, perpendicular magnetization based on the FP recording system is carried out.

The reason why such a perpendicular magnetization is conducted will be now described with reference to FIGS. 13B and 13C. By making a setting such that Tw<Bmin, a small offset of Bmin - Tw (sec) in terms of time, or v·(Bmin - Tw) (m) in terms of distance between the magnetic transition position (indicated by N in Figure) by the falling current a and the magnetization transition position (indicated at P in Figure) by the rising current b, necessarily occurs. In this case, the magnetization M formed by the falling current a is subjected to the head magnetic field H of the opposite polarity produced by the rising current b within the region K. However, because this magnetic field H is a weak magnetic field spaced from the gap center position P (i.e., shifted from the position N by Bmin - Tw in terms of time), the magnetization M formed within the region K is not reversed, and is left as it is. Thus, by making a setting such that Tw<Bmin, it is possible to conduct a perpendicular magnetic recording in accordance with the FP recording system also in the short wavelength region.

Various experimental results in carrying out the perpendicular magnetic recording/reproducing using the above-mentioned FP recording system will be now described.

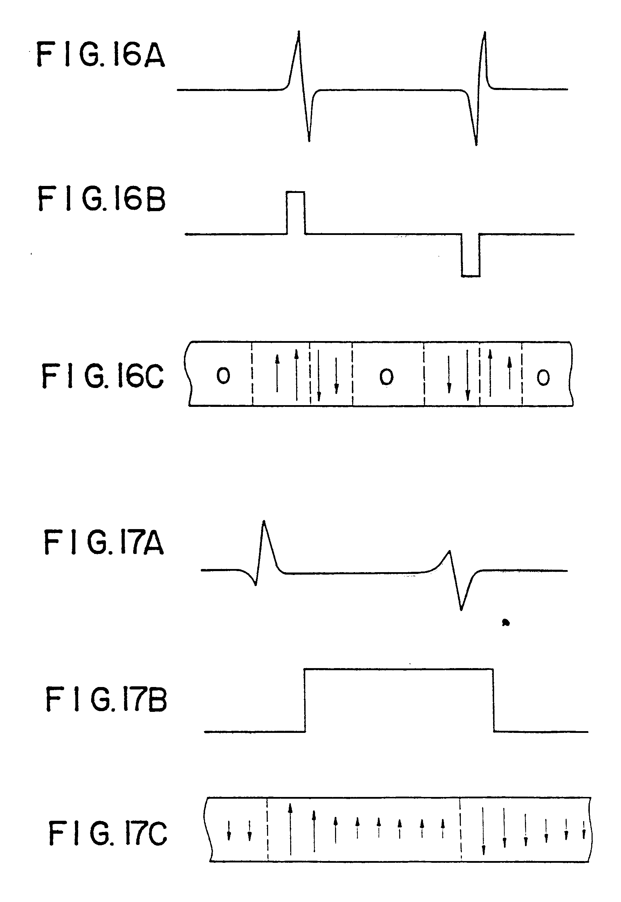

Initially, the FP recording waveform and the conventional NRZI recording current waveform which are actually used are shown in FIGS. 14B and 14A, respectively. This FP recording waveform may be prepared by using a circuit, shown in FIG. 15, where an input NRZI signal is delayed by a delay circuit 11 and the delayed signal is subtracted from the input NRZI signal by a subtracter 12.

As shown in FIG. 14B, the characteristic feature of the FP recording current waveform resides in that opposite polarity pulses are repeatedly and alternately generated in correspondence with the polarity reversal of a binary signal to be recorded, and a zero (neutral) period is by all means present between positive and negative pulses. Therefore, in the FP recording current waveform, positive or negative pulses are not consecutively generated, nor a negative pulse is not directly coupled to a positive pulse. Such characteristic feature is present not only for an NRZI signal but also for all types of binary signals to be recorded.

The isolated reproduced waveforms, the recording current waveforms and the magnetization patterns of the FP recording system and the NRZI recording system are shown in FIGS. 16A-C and 17A-C in relation to each other, respectively. The experimental conditions were set so that they were common to the respective recording systems. A ring head made of ferrite core having a gap length of 0.20 μm was used and the relative speed was 2.07 m/s. FIGS. 16A and 17A show isolated reproduced waveforms, FIGS. 16B and 17B recording current waveforms, and FIGS. 16C and 17C magnetization partterns, respectively. For the perpendicular medium, double layer medium of Co-Cr/Co-Cr-Nb was used, and the magnetic property was such that the thickness was 0.25 μm, Ms = 370 emu/cc, Hc⊥, = 670 Oe, and Hc// = 60 Oe.

As seen from FIG. 16A, the dipulse ratio of the reproduced waveform in the FP recording system is approximately equal to 1 and therefore the symmetry thereof is well maintained. On the other hand, the dipulse ratio of the reproduced waveform by the NRZI recording system shown in FIG. 17A is approximately equal to 0.5 and therefore the symmetry thereof is poor. For this reason, there requires of carrying out the waveform equalization in the NRZI recording system.

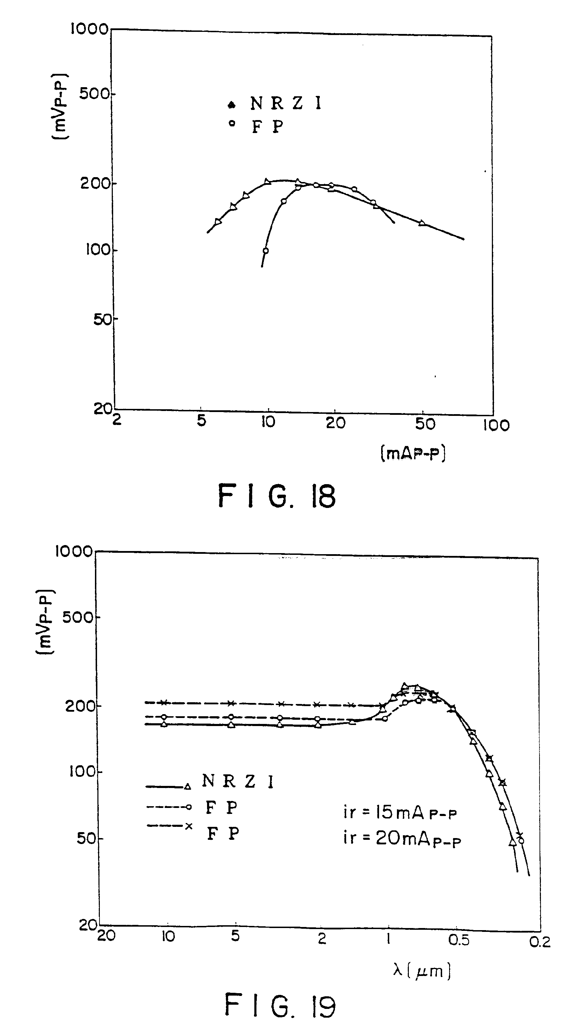

FIG. 18 shows the input/output characteristics of the NRZI recording system and the FP recording system. In the experiment referred in the following, a ring head comprised of Sendust (Registered trademark) having a gap length of 0.2 μm is used.

As seen from FIG. 18, the saturation current of the FP recording system is slightly larger than that of the NRZI recording method, but there is no problem because the former is approximately 1.5 times larger than the latter. It is considered that the reason why the saturation current of the NRZI recording system is small is that the demagnetization field based on the magnetization in an opposite direction before transition of magnetization, serves to strengthen the head magnetic field (see an arrow of broken lines shown in FIG. 4B).

FIG. 19 shows the wavelength characteristics of the NRZI recording system and the FP recording system (recording current ir = 15 mAᴾ⁻ᴾ, ir = 20 mAᴾ⁻ᴾ), respectively. In the short wavelength region, both outputs are nearly equal to each other, but in the recording current ir = 20 mAᴾ⁻ᴾ system, the output of the FP recording in the long wavelength region is slightly larger than that of the NRZI recording. However, taking into consideration the bit shift to be described later, the recording current ir = 15 mAᴾ⁻ᴾ in the FP recording system is the minimum and such a value is considered to be satisfactory.

The bit shift characteristics will be now described. Generally, in the case of recording digital information, there are a wide variety of combinations of binary "1" and "0", i.e., various bit patterns appear in such a recording. As a result, in the case of the NRZI recording system, to a given information write density, there may locally appear a light or heavy density of pulses depending upon the state of the bit pattern. By such local pulse density variation, the crest or peak value of the read out voltage lowers, or a phase or position of reproduced bit changes. Such a phenomenon is called bit shift.

In the case of the NRZI recording system, the worst pattern in a phase direction is the two-bit pattern "00011000" and the worst pattern in an amplitude direction is the three-bit pattern. In the case of perpendicular recording, because the waveform is dipulse, three bit pattern is not a great problem.

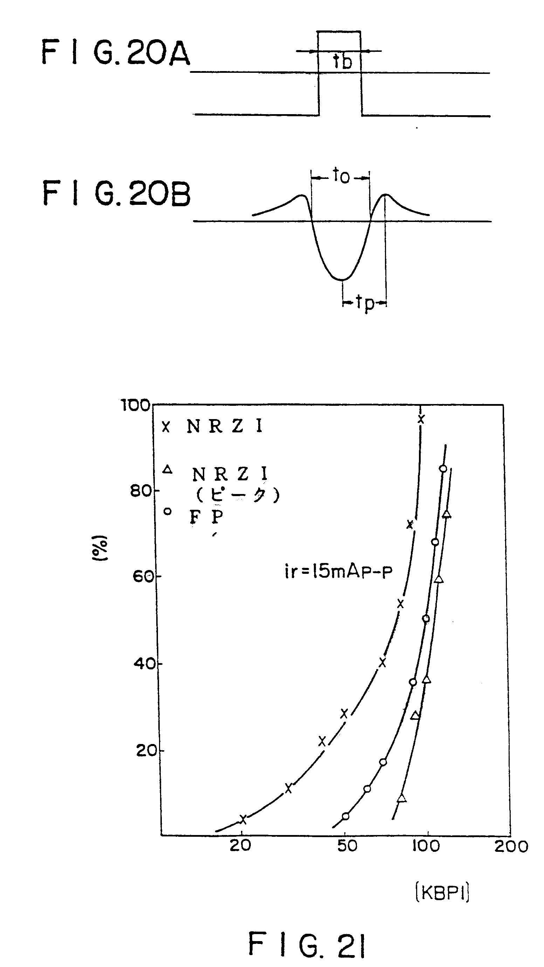

Actual calculation of the bit shift will be explained. When it is assumed that a reproduced waveform shown in FIG. 20B is obtained with respect to a recording current waveform shown in FIG. 20A, and that $t_b$, $t_o$ and $t_p$ are taken as shown in the figure, a quantity of bit shift (regarding zero crossing) and an amount of bit shift (regarding peak) are calculated in accordance with the following equations:

$$\text{Bit shift amount (zero crossing)} = \frac{t_o - t_b}{t_w} \, (\%)$$

$$\text{Bit shift amount (peak)} = \frac{t_p - t_b}{t_w} \, (\%)$$

where $t_w$ is a window margin and is one half of the minimum recording wavelength in the MFM recording system.

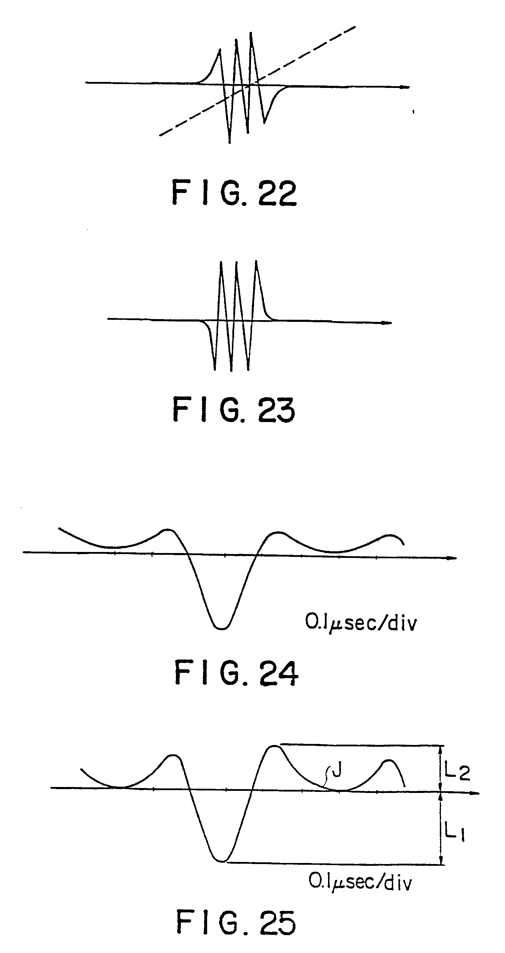

Fig. 21 is a graph showing the bit shift characteristics of the two-bit pattern (00011000) in the cases of the NRZI recording system and the FP recording system. The bit amount (peak) of the NRZI recording system has the smallest value, and it is necessary to increase the peak amplitude of the second bit by waveform equalization at the time of reproduction or playback. On the other hand, in the case of the bit amount (zero crossing) of the NRZI recording system, because the bit shift is large, it is necessary to reduce the bit shift by the waveform equalization at the time of reproduction or playback. Hilbert transformation is used as the equalization method in either case. On the contrary, the bit amount (zero crossing) of the FP recording system is such that the bit shift takes a low value and it is unnecessary to carry out waveform equalization.

Reproduced waveforms of 120 KBPI 5 bit pattern of the NRZI recording system and the FP recording system are shown in FIGS. 22 and 23, respectively. In the case of the NRZI recording system, because the symmetry of the dipulse is poor, the base line of the waveform of the 5-bit section is deviated with respect to abscissa (x-axis). Namely, displacement of the base line is observed (which is indicated by the broken line in the figure). On the contrary, because the symmetry of the dipulse is good in the case of the FP recording system, displacement of the base line does not appear, thus making it possible to immediately detect the zero crossing.

Reproduced waveforms of the 100 KBPI 2 bit pattern of the NRZI recording system and the FP recording system are shown in FIGS. 24 and 25, respectively. It is apparent from respective figures that the amount of bit shift of the zero crossing of the FP recording system is smaller than that of the NRZI recording system. In the FP recording system shown in FIG. 25, the peak value ratio $L_2/L_1$ relative to the reference level, is large. This is advantageous for data discrimination because the drop at the saddle portion (indicated by an arrow J in the figure) is large.

As is apparent from the afore-mentioned experimental result, the FP recording system using this invention is a perpendicular magnetic recording system far superior than the NRZI recording system with regard to symmetry of the reproduced waveform (dipulse ratio characteristic) and a bit shift characteristic, etc.

To clarify the characteristic features of the present invention, current waveforms for recording various types of binary signals will be described while comparing recording current waveforms of the conventional system and the FP system.

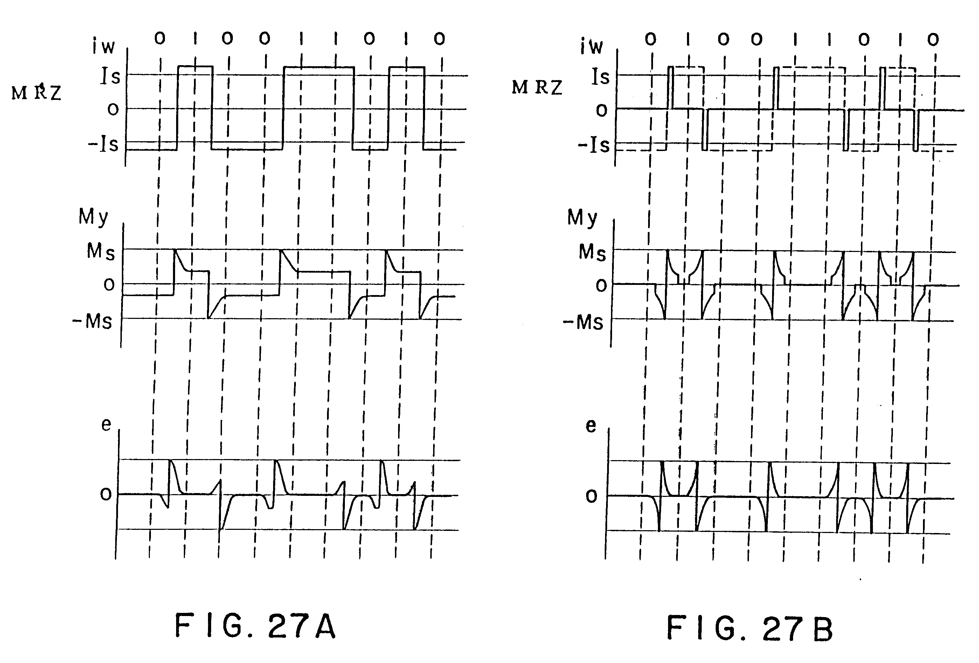

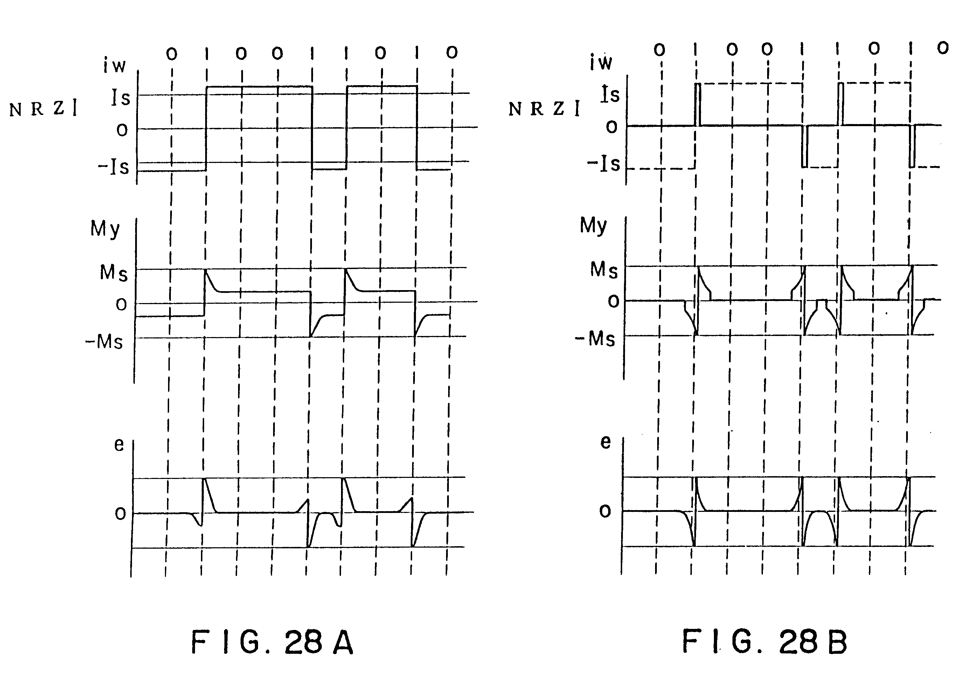

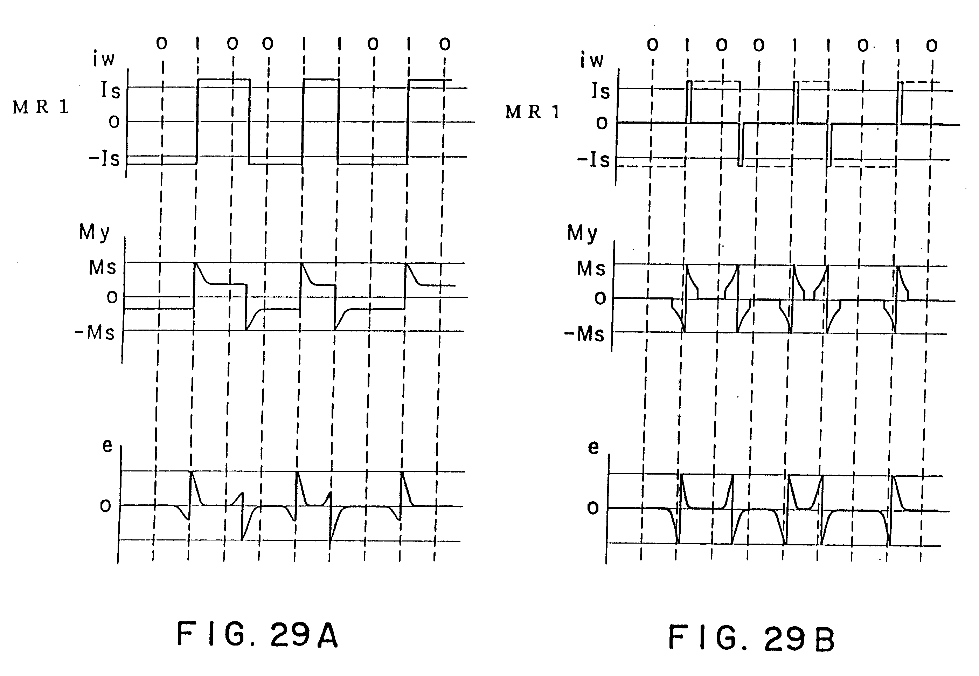

The signal formats used in the following description include by way of example, a most commonly used non return zero (NRZ), previously described NRZI, and modified frequency modulation (MFM). FIGS. 27A, 28A and 29A are for the three conventional recording systems, respectively. In Figures, the top represents a recording current iw, middle a magnetization state My in the y direction, and bottom a read-out voltage e.

As seen from Figures, the magnetization does not return to the state (0) which has no magnetization at all during the data holding period, resulting in a read-out voltage of an asymmetric dipulse relative to the origin.

FIGS. 27B, 28B and 29B are for the present invention, i.e., for the FP system. The top represents a recording current iw, middle a magnetization state My in the y direction, and bottom a read-out voltage e.

As seen from the Figures, narrow pulses corresponding to the polarity change of a write current are generated. Each narrow pulse rises to a current peak of approximately plus Is (+ 1) and quickly thereafter, returns to the 0 level state and is maintained at that state up to the next polarity reversal of the recording signal, then a narrow pulse of opposite polarity is generated rising up to a current peak of approximately minus Is (- 1) and quickly thereafter, returns to the 0 level state and is maintained at that state as shown. Since the write current value becomes 0, the magnetization state necessarily returns once to 0 during the write data holding period. As a result, the magnetization state becomes symmetrical relative to the origin so that the read-out voltage waveform does not become a dipulse.

As described above, in a conventional recording system, as shown in FIGS. 27A, 28A and 29A by way of example, the binary signal waveform is the same as the recording current waveform. However, according to the present invention, narrow pulses converted from the binary signal by the circuit shown in FIG. 15 described previously are used as a recording current. The magnetization state is therefore quite different from the conventional magnetization state.

While the waveform of a rectangular pulse having a very small width as shown in FIG. 26A is used as the FP recording waveform in the above-desribed embodiment, this invention is not limited to such a use. For example, a sawtooth pulse waveform as shown in FIGS. 26B and 26C may be used. By modifying the pulse waveform from the rectangular waveform, it is possible to control a current applied to the ring head within a predetermined pulse width Tw. Thus, by suitably controlling the pulse waveform, it is possible to further improve magnetization formed on both sides of the magnetization transition position.

Furthermore, in the above embodiment, a digital signal of a binary code format has been used. However, the invention is not limited thereto, but an analog signal having a rectangular waveform obtained by amplitude-limiting an FM signal may be used for perpendicular recording.

## INDUSTRIAL APPLICABILITY

According to the perpendicular magnetic recording system of this invention, even if a rectangular wave is recorded and reproduced, a reproduced waveform becomes symmetric relative to an origin, thus improving recording accuracy.

## Claims

1. A method for performing perpendicular magnetic recording of a magnetic medium, the method comprising the steps of:

   inputting a binary signal to be recorded;
   generating a train of narrow pluses the polarities of which are switched alternately in correspondence with a polarity change of a waveform of said binary signal, the time Tw corresponding to the width of said narrow pulse being set smaller than the time Bmin corresponding to a minimum polarity switching interval of said recording current and a neutral level period being maintained for a time longer than zero between adjacent narrow pulses having different polarities from each other; and

applying said train of narrow pulses as a recording current to a ring head for causing a perpendicular anisotropic medium to have magnetic transitions.

2. A method for performing perpendicular magnetic recording according to claim 1, wherein the waveform of said recording current is a train of narrow pulses where peak values take +1 and -1 alternately, and said neutral level is zero.

3. A method according to claim 1 or 2 wherein said medium is caused to have magnetic transitions by recording opposite polarity magnetizations simultaneously in said medium by means of leading and trailing portions of said ring head.

**Patentansprüche**

1. Verfahren zur vertikalen magnetischen Aufzeichnung auf einem magnetischen Medium, umfassend die Schritte
   - Eingeben eines aufzuzeichnenden Binärsignals;
   - Erzeugen eines Zugs von schmalen Pulsen, deren Polaritäten wechselweise umgeschaltet werden, in Übereinstimmung mit einer Polaritätsänderung einer Wellenform des Binärsignals, wobei die Zeit Tw, korrespondierend zu der Pulsbreite des schmalen Pulses kürzer eingestellt wird als die Zeit Bmin, die einen minimalen Polaritätsschaltintervall des Aufzeichnungsstromes entspricht und eine neutrale Pegelperiode für eine Zeitspanne länger als Null zwischen benachbarten engen Pulsen, die unterschiedliche Polaritäten aufrecht erhalten bleibt; und
   - Anlegen dieses Zugs von engen Pulsen als Aufzeichnungsstrom an einen Ringkopf, um magnetische Übergänge in einem senkrecht anisotropen Medium auszulösen.

2. Verfahren zur vertikalen magnetischen Aufzeichnung gemäß Anspruch 1, bei dem die Wellenform des Aufzeichnungsstromes ein Zug von schmalen Pulsen ist, deren Scheitelwerte alternierend +1 und -1 und der neutrale Pegel Null sind.

3. Verfahren gemäß Anspruch 1 oder 2, bei dem in dem Medium magnetische Übergänge durch die zeitgleiche Aufzeichnung von Magnetisierungen entgegengesetzer Polarität in dem Medium mittels Führungs- und Rückteile des Ringkopfes herbeigeführt werden.

**Revendications**

1. Procédé pour exécuter un enregistrement magnétique perpendiculaire dans un support magnétique, le procédé comprenant les étapes consistant à :

   introduire un signal binaire devant être enregistré;

   produire un train d'impulsions étroites, dont les polarités sont commutées alternativement en correspondance avec un changement de polarité d'une même forme d'onde dudit signal binaire, la durée Tw correspondant à la largeur de ladite impulsion étroite étant réglée à une valeur supérieure à la durée Bmin qui correspond à un intervalle minimum de commutation de la polarité dudit courant d'enregistrement, et une période à niveau neutre étant maintenue pendant un intervalle de temps supérieur à zéro entre des impulsions étroites adjacentes ayant des polarités différentes; et

   appliquer ledit train d'impulsions étroites en tant que courant d'enregistrement à une tête annulaire pour amener un support anisotrope perpendiculaire à présenter des transitions magnétiques.

2. Procédé pour exécuter un enregistrement magnétique perpendiculaire selon la revendication 1, dans lequel la forme d'onde dudit courant d'enregistrement est un train d'impulsions étroites, dans laquelle des valeurs crêtes prennent alternativement les valeurs +1 et -1, et ledit niveau neutre est zéro.

3. Procédé selon la revendication 1 ou 2, selon lequel ledit support est amené à présenter des transitions magnétiques grâce à l'enregistrement d'aimantations à polarités opposées simultanément dans ledit support au moyen de parties avant et arrière de ladite tête annulaire.

FIG.IA

FIG.IB

FIG.2A

FIG.2B

Ia Ic Ib

Ia Ic Ib

O

O

2

3

I

FIG.3A

FIG.3B

FIG.4A

FIG.4B

FIG.5A

FIG.5B

FIG.6A

FIG.6B

FIG. 7A

FIG. 7B

FIG. 8A

FIG. 8B

F I G. 9A

F I G. 9B

F I G. IOA

F I G. IOB

F I G. IIA

F I G. IIB

F I G. I2A

F I G. I2B

FIG.13A

FIG.13B

FIG.13C

FIG.13D

FIG.14A

FIG.14B

(0.1μsec/div)

FIG.15

FIG.16A

FIG.16B

FIG.16C

FIG.17A

FIG.17B

FIG.17C

F I G. 18

F I G. 19

F I G. 20A

$t_b$

F I G. 20B

$t_o$

$t_p$

F I G. 21

x N R Z I

△ N R Z I
（ピーク）

○ F P

ir=15mAP-P

(%)

100

80

60

40

20

20    50    100    200

(KBPI)

F I G. 22

F I G. 23

0.1μsec/div

F I G. 24

$L_2$

$L_1$

0.1μsec/div

F I G. 25

FIG.26A

FIG.26B

FIG.26C

FIG. 27B

FIG. 27A

FIG. 28 A

FIG. 28 B

FIG. 29 B

iw

Is
0
-Is

MR 1

My

Ms
0
-Ms

e

0

FIG. 29 A

iw

Is
0
-Is

MR 1

My

Ms
0
-Ms

e

0